# EUROPÄISCHE PATENTSCHRIFT

(11) **EP 4 063 638 B1**
(45) Veröffentlichungstag und Bekanntmachung des Hinweises auf die Patenterteilung: **22.01.2025**
(21) Anmeldenummer: 22161793.9
(22) Anmeldetag: 14.03.2022
(51) Int. Cl.: F02D 41/00, F02D 41/12

(54) **ERWÄRMUNG EINER ABGASRÜCKFÜHRLEITUNG WÄHREND EINES SCHUBBETRIEBS EINES VERBRENNUNGSMOTORS**
HEATING OF AN EXHAUST GAS RECIRCULATION LINE DURING PROPULSION OPERATION OF A COMBUSTION ENGINE
CHAUFFAGE D'UN TUYAU DE RECYCLAGE DES GAZ D'ÉCHAPPEMENT EN RÉGIME DE FREIN MOTEUR D'UN MOTEUR À COMBUSTION INTERNE

(30) Priorität: 22.03.2021 DE 102021107008
(43) Veröffentlichungstag der Anmeldung: 28.09.2022
(73) Patentinhaber: VOLKSWAGEN AG, 38440 Wolfsburg (DE)
(72) Erfinder: Bunkus, Johannes, 39393 Hötensleben OT Barneberg (DE); Kraus, Stephan, 38464 Groß Twülpstedt (DE); Blei, Ingo, 38110 Braunschweig (DE)
(74) Vertreter: Bungartz, Florian

(56) Entgegenhaltungen:
- DE-A1- 102016 201 185
- DE-A1- 102019 135 831
- DE-A1- 102019 135 832
- DE-T5- 112011 104 505

## Beschreibung

Die Erfindung betrifft ein Verfahren zum Betreiben einer Brennkraftmaschine, die einen Verbrennungsmotor, einen mit dem Verbrennungsmotor gekoppelten Generator, einen Frischgasstrang, einen Abgasstrang, eine Abgasrückführleitung, die aus dem Abgasstrang abzweigt und in den Frischgasstrang mündet, und mindestens eine elektrische Heizvorrichtung, die in den Abgasstrang oder in die Abgasrückführleitung integriert ist, umfasst.

Im Betrieb einer Brennkraftmaschine kann eine Abgasrückführung vorgesehen sein, um die Schadstoffrohemissionen des Verbrennungsmotors der Brennkraftmaschine, insbesondere hinsichtlich der Stickoxidemissionen, möglichst gering zu halten. Dabei wird Abgas aus einem Abgasstrang der Brennkraftmaschine abgezweigt und in einen Frischgasstrang der Brennkraftmaschine eingeleitet und dort mit Luft vermischt. Dieses Luft-Abgas-Gemisch wird dann dem Verbrennungsmotor als Frischgas für eine Verbrennung mit Kraftstoff zugeführt. Bekannt sind dabei sowohl Hochdruck- als auch Niederdruckabgasrückführungen, wobei im Fall einer Niederdruckabgasrückführung das Abgas stromab einer Abgasturbine eines Abgasturboladers aus dem Abgasstrang abgezweigt und stromauf eines Frischgasverdichters des Abgasturboladers in den Abgasstrang eingeleitet wird. Bei einer Hochdruckabgasrückführung erfolgt die Abzweigung dagegen, sofern ein Abgasturbolader vorgesehen ist, stromauf der Abgasturbine und die Einleitung stromab des Frischgasverdichters. Für eine Steuerung der Menge des rückgeführten Abgases ist in eine für die Überleitung von Abgas von dem Abgasstrang zu dem Frischgasstrang vorgesehene Abgasrückführleitung ein sogenanntes AGR-Ventil integriert. Weiterhin ist in eine solche Abgasrückführleitung üblicherweise auch noch ein Abgaskühler zur bedarfsweisen Kühlung des über die Abgasrückführleitung geführten Abgases vorgesehen. Dadurch sollen negative Auswirkungen einer zu hohen Temperatur des Frischgases auf die Verbrennungsvorgänge in dem Verbrennungsmotor sowie im Fall einer Niederdruckabgasrückführung eine thermische Überlastung des Frischgasverdichters vermieden werden.

Eine Kühlung von Abgas mittels eines Abgaskühlers kann entweder direkt oder indirekt durch Umgebungsluft erfolgen, wobei bei einer indirekten Kühlung in dem Abgaskühler ein Übergang von Wärmeenergie von dem Abgas auf ein flüssiges Kühlmittel erfolgt, das dann in einem Kühlmittelkühler wieder rückgekühlt wird. Der Vorteil eines solchen indirekt kühlenden Abgaskühlers liegt in der Realisierung einer relativ hohen Kühlleistung bei relativ kleinem Bauraum.

Nach einem Kaltstart einer Brennkraftmaschine, d.h. nach einer Inbetriebnahme bei relativ geringer und insbesondere im Wesentlichen der Umgebungstemperatur entsprechender Temperatur der Brennkraftmaschine beziehungsweise der dazugehörigen Komponenten kann eine Abgasrückführung üblicherweise nicht unmittelbar umgesetzt werden, weil es aufgrund des dann noch relativ kalten Abgases, das von dem Verbrennungsmotor erzeugt wurde, in einem erheblichen Ausmaß zu einer Kondensation von Feuchtigkeit in der Abgasrückführleitung kommen kann. Dieses Kondensat kann zu einer Beschädigung von in die Abgasrückführleitung und/oder in den Frischgasstrang integrierten Komponenten führen.

Um die Schadstoff- und insbesondere Stickoxidrohemissionen einer Brennkraftmaschine nach einem Kaltstart möglichst gering zu halten, wäre eine möglichst schnelle Aktivierung einer Abgasrückführung vorteilhaft.

Die AT 520 414 A1 offenbart ein Verfahren zum Betreiben einer Brennkraftmaschine mit einer Abgasnachbehandlungsanlage und einer Heizvorrichtung, wobei die Heizvorrichtung zur Vorheizung mindestens einer Komponente der Abgasnachbehandlungsanlage bei unbefeuerter Brennkraftmaschine eingerichtet ist. Hierzu umfasst die Heizvorrichtung ein Heizelement und eine Fördervorrichtung zur Erzeugung eines die Abgasnachbehandlungsanlage durchströmenden, beheizten Gasstroms. Dieser beheizte Gasstrom kann dabei auch zur Ausbildung eines Kreislaufs über eine Abgasrückführleitung geführt werden.

Die DE 10 2012 209 202 A1 beschreibt ein Verfahren zum Betreiben eines Hybrid- oder Elektrofahrzeugs, wobei elektrische Energie, die infolge eines Betätigens eines regenerativen Bremssystems erzeugt wurde, direkt, d.h. unter Umgehung einer Batterie, zu einem elektrischen Nebenaggregat des Hybrid- oder Elektrofahrzeugs geführt wird. Das elektrische Nebenaggregat kann ein elektrisch beheizter Katalysator sein.

Die AT 521 758 A1 offenbart ein Verfahren, gemäß dem ein Ottomotor in einer Betriebsphase, die eine Normal- beziehungsweise Lastbetriebsphase und eine Schubbetriebsphase umfasst, betrieben wird. In der Normalbetriebsphase werden in dem Ottomotor Treibstoff und Luft zu Abgas umgesetzt. Die Schubbetriebsphase kann eine unbefeuerte Schubbetriebsphase und/oder eine befeuerte Schubbetriebsphase sein, wobei in der befeuerten Schubbetriebsphase das einen Hauptkatalysator durchströmende Gas sauerstoffarm ist. In der unbefeuerten Schubbetriebsphase wird dem Ottomotor jenes Abgas über eine Abgasrückführleitung zugeführt, das vor oder bei dem Übergang von der Normalbetriebsphase oder einer befeuerten Schubbetriebsphase in die unbefeuerte Schubbetriebsphase in dem Ottomotor erzeugt wurde.

Die EP 2 336 538 A1 beschreibt eine Brennkraftmaschine mit einer Abgasrückführleitung, in die ein Abgaskühler integriert ist. Stromab des Abgaskühlers ist in der Abgasrückführleitung eine steuerbare Verzweigung vorgesehen, mittels der das von dem Abgaskühler kommende Abgas zum einen weiter über die Abgasrückführleitung und damit in einen Frischgasstrang der Brennkraftmaschine und zum anderen zurück in den Abgasstrang führbar ist. Dadurch wird ermöglicht, bedarfsweise das gesamte Abgas der Brennkraftmaschine über den Abgaskühler zu führen, auch wenn nur ein Teil davon für eine Abgasrückführung genutzt werden soll. Insbesondere nach einem Kaltstart der Brennkraftmaschine kann dadurch Wärmeenergie des Abgases möglichst vollständig auf ein den Abgaskühler durchströmendes Kühlmittel übertragen werden, um dieses vorzuwärmen.

Die DE 10 2019 135 832 A1 offenbart, einen Katalysator in dem Abgasstrang einer Brennkraftmaschine vor einem Start eines Verbrennungsmotors vorzuwärmen, wozu dem Katalysator eine elektrische Heizvorrichtung zugeordnet ist, die von einer Traktionsbatterie mit der für den Betrieb erforderlichen elektrischen Leistung versorgt wird. Während des Vorheizens des Katalysators kann vorgesehen sein, mittels der Heizvorrichtung erwärmte Luft in einem Kreislauf zu führen, der eine Niederdruck-Abgasrückführleitung und eine Hochdruck-Abgasrückführleitung umfasst. Ein dazu vergleichbares Vorgehen ist auch in der

DE 10 2019 135 831 A1 beschrieben.

Die DE 10 2016 201 185 A1 offenbart eine Abgasnachbehandlungsvorrichtung, der eine elektrische Heizvorrichtung zugeordnet ist. Die Heizvorrichtung kann von einem Generator in einem Schubbetrieb einer Brennkraftmaschine mit der für den Betrieb erforderlichen elektrischen Leistung versorgt werden.

Die DE 11 2011 104 505 T5 beschreibt einen AGR-Kühler, der in ein Kühlsystem einer Brennkraftmaschine integriert ist. Das Kühlsystem umfasst auch einen Kühlmittelkühler sowie einen Bypass zu diesem Kühlmittelkühler.

Der Erfindung lag die Aufgabe zugrunde, die Effizienz des Antriebsstranges zu steigern.

Diese Aufgabe wird durch die Umsetzung eines Verfahrens gemäß dem Patentanspruch 1 gelöst. Vorteilhafte Ausführungsformen dieses Verfahrens sind Gegenstände der weiteren Patentansprüche und ergeben sich aus der nachfolgenden Beschreibung der Erfindung.

Ein erfindungsgemäßes Verfahren zum Betreiben einer Brennkraftmaschine, die einen Verbrennungsmotor, einen mit dem Verbrennungsmotor gekoppelten Generator, einen Frischgasstrang, einen Abgasstrang, eine Abgasrückführleitung, die aus dem Abgasstrang abzweigt und in den Frischgasstrang mündet, und mindestens eine elektrische Heizvorrichtung, die in den Abgasstrang oder in die Abgasrückführleitung integriert ist, umfasst, ist dadurch gekennzeichnet, dass während eines Schubbetriebs des Verbrennungsmotors, in dem dieser eine negative Antriebsleistung beziehungsweise eine Bremsleistung bereitstellt, wobei dazu vorzugsweise kein Kraftstoff in die Brennräume eingebacht wird, die Heizvorrichtung mit von dem Generator bereitgestellter Energie betrieben und mittels der Heizvorrichtung erwärmtes Abgas (das aufgrund des Schubbetriebs im Wesentlichen oder ausschließlich aus Luft bestehen kann) teilweise oder vollständig über die Abgasrückführleitung geführt wird.

Der Schubbetrieb kann dabei insbesondere daraus resultieren, dass ein sich bewegendes Kraftfahrzeug, für dessen Antrieb die Brennkraftmaschine grundsätzlich vorgesehen ist, unter Nutzung seiner kinetischen Energie den Verbrennungsmotor antreibt, indem der zwischen dem Verbrennungsmotor und den angetriebenen Rädern des Kraftfahrzeugs liegende Abschnitt des Antriebsstrangs des Kraftfahrzeugs nicht unterbrochen bzw. eingekuppelt ist. Der insbesondere unbefeuerte Verbrennungsmotor wird dann durch das sich bewegende Kraftfahrzeug mitgeschleppt, wobei dieser und die mit diesem gekoppelten Komponenten, insbesondere der Generator, die negative Antriebsleistung beziehungsweise die Bremsleistung erzeugt. Ein Schubbetrieb einer Brennkraftmaschine liegt üblicherweise dann vor, wenn das Kraftfahrzeug verlangsamt werden soll, wie insbesondere bei einem Ausrollen vor einem erwarteten Halt, beispielsweise an einer Verkehrsampel, oder wenn das Kraftfahrzeug ein Gefälle hinunterfährt und dabei nicht beschleunigt werden soll. Üblicherweise geht ein solcher Schubbetrieb einer Brennkraftmaschine daher zumindest zeitweise mit einem Bremsbetrieb des Kraftfahrzeugs, in dem dieses durch eine Nutzung einer Betriebsbremse abgebremst wird, einher. Während eines Schubbetriebs einer Brennkraftmaschine wird daher häufig bewusst kinetische Energie des Kraftfahrzeugs reduziert, wobei der reduzierte Anteil der Energie üblicherweise ungenutzt verloren geht.

Durch das erfindungsgemäße Vorgehen kann die Reduzierung von kinetischer Energie des Kraftfahrzeugs oder eines sonstigen, den Verbrennungsmotor mitschleppenden Systems vorteilhaft genutzt werden, um die Heizvorrichtung zu betreiben. Dies weist zum einen den Vorteil auf, dass die für den Betrieb der Heizvorrichtung erforderliche elektrische Energie nicht durch eine Umwandlung von Kraftstoff mittels eines Lastbetriebs des Verbrennungsmotors, in dem dieser eine positive Antriebsleistung bereitstellt, erzeugt werden muss. Zum anderen wird das Abgas, das insbesondere bei einem unbefeuerten Schubbetrieb des Verbrennungsmotors eine üblicherweise nur sehr niedrige Abgastemperatur aufweist, mittels der Heizvorrichtung beheizt, so dass trotz des Schubbetriebs der Brennkraftmaschine der Abgasstrang (bis zu dem Abzweig der Abgasrückführleitung) und die Abgasrückführleitung aktiv beheizt wird. Ein konventioneller Schubbetrieb würde dagegen aufgrund der sehr geringen Abgastemperatur tendenziell eher ein Auskühlen des Abgasstrangs und der Abgasrückführleitung bewirken.

Die Durchführung eines erfindungsgemäßen Verfahrens kann insbesondere während einer Warmlaufphase der Brennkraftmaschine, die dann vorliegt, wenn zumindest eine Komponente der Brennkraftmaschine, beispielsweise der Verbrennungsmotor, eine Betriebstemperatur aufweist, die unterhalb einer definierten Mindesttemperatur liegt, von Vorteil sein, denn während einer solchen Warmlaufphase stellt sich die bereits beschriebene Problematik, wonach die Abgasrückführleitung und die darin integrierten Komponenten so kalt sein können, dass aufgrund einer Kondensationsgefahr keine Abgasrückführung durchgeführt beziehungsweise kein Abgas über die Abgasrückführleitung geführt werden kann. Eine solche Kondensationsgefahr besteht bei der Durchführung des erfindungsgemäßen Verfahrens aufgrund des Erhitzens des Abgases mittels der Heizvorrichtung im Wesentlichen nicht. Gleichzeitig bewirkt das Führen des erhitzten Abgases über die Abgasrückführleitung eine möglichst schnelle Erwärmung der Abgasrückführleitung mit den darin integrierten Komponenten, wodurch die Gefahr einer Kondensatbildung, die insbesondere an kalten Oberflächen vorliegt, reduziert wird. Dementsprechend kann es sinnvoll sein, die Heizvorrichtung während eines Schubbetriebs des Verbrennungsmotors zumindest auch oder nur während einer Warmlaufphase der Brennkraftmaschine durchzuführen. Durch das Erwärmen der Abgasrückführleitung kann eine Abgasrückführung möglichst schnell nach einem Kaltstart der Brennkraftmaschine durchgeführt werden.

Eine Warmlaufphase kann insbesondere mit einem Kaltstart der Brennkraftmaschine beginnen. Eine solche kann jedoch auch dann auftreten, wenn der Verbrennungsmotor für einen längeren Zeitraum mit nur geringer Last oder sogar im Schubbetrieb betrieben wurde, beispielsweise aufgrund einer länger andauernden Gefällefahrt eines die Brennkraftmaschine umfassenden Kraftfahrzeugs.

Die Heizvorrichtung kann vorzugsweise einer in den Abgasstrang integrierten Abgasnachbehandlungseinrichtung zugeordnet sein, wobei die Abgasrückführleitung stromab der Abgasnachbehandlungseinrichtung aus dem Abgasstrang abzweigt. Dadurch kann die Heizvorrichtung auch dazu genutzt werden, die Abgasnachbehandlungseinrichtung bedarfsweise zu erhitzen, was wiederum insbesondere während einer Warmlaufphase der Brennkraftmaschine von Vorteil sein kann, um nach einem Kaltstart möglichst schnell die Anspringtemperatur der Abgasnachbehandlungseinrichtung, ab der von einer ausreichenden Wirksamkeit für die Abgasnachbehandlung ausgegangen werden kann, zu erreichen. Zudem kann die Abgasnachbehandlungseinrichtung bei einem länger andauernden Betrieb des Verbrennungsmotors mit geringer Last oder im Schub mittels der Heizvorrichtung ausreichend warm gehalten werden. Auch kann ein Erhitzen der Abgasnachbehandlungseinrichtung dafür vorgesehen sein, temporär eine für eine Regeneration relativ hohe Temperatur zu erreichen. Durch eine solche Doppelnutzung einer Heizvorrichtung kann vermieden werden, eine separate Heizvorrichtung, die ausschließlich für ein Erwärmen der Abgasrückführleitung im Rahmen eines erfindungsgemäßen Verfahrens genutzt wird, bereitstellen zu müssen.

In die Abgasrückführleitung kann vorzugsweise ein Abgaskühler beziehungsweise eine erste Wärmetauschseite davon integriert sein, um während eines Lastbetriebs des Verbrennungsmotors, insbesondere während eines Normalbetriebs der Brennkraftmaschine (d.h. nicht während eines Warmlaufbetriebs), das über die Abgasrückführleitung geführte Abgas zu kühlen. Dadurch kann eine thermische Überlastung von in die Abgasrückführleitung und in den sich ab der Mündung der Abgasrückführleitung erstreckenden Abschnitt des Frischgasstrangs, insbesondere eine thermische Überlastung eines in diesen Abschnitt des Frischgasstrangs integrierten Frischgasverdichters, vermieden werden. Dem erfindungsgemäß angestrebten Ziel einer Erwärmung der Abgasrückführleitung und der Einleitung noch relativ warmen Abgases in den Frischgasstrang während einer Warmlaufphase der Brennkraftmaschine kann ein solcher Abgaskühler jedoch entgegenwirken. Vorzugsweise ist im Rahmen eines erfindungsgemäßen Verfahrens daher vorgesehen, dass während des Schubbetriebs das über die Abgasrückführleitung zu führende Abgas über einen (den Abgaskühler umgehenden) Abgasbypass der Abgasrückführleitung geführt wird und/oder eine Kühlmittelströmung durch den Abgaskühler beziehungsweise durch eine zweite Wärmetauschseite davon im Vergleich zu einem (insbesondere jedem) Lastbetrieb reduziert oder (vollständig) verhindert wird. Dadurch kann folglich eine ungewollte Kühlung des über die Abgasrückführleitung geführten Abgases mittels des Abgaskühlers vermieden oder zumindest gering gehalten werden. Zur Reduzierung oder Verhinderung der Kühlmittelströmung durch den Abgaskühler kann diese grundsätzlich entsprechend gedrosselt werden. Vorteilhaft kann jedoch vorgesehen sein, die Kühlmittelströmung teilweise oder vollständig über einen (den Abgaskühler umgehenden) Kühlmittelbypass eines Kühlsystems der Brennkraftmaschine zu führen. Dadurch kann vermieden werden, dass durch eine Reduzierung oder Verhinderung der Kühlmittelströmung durch den Abgaskühler auch eine Kühlleistung für andere Komponenten des Kühlsystems, die in einen oder mehrere auch den Abgaskühler umfassende Kühlkreise integriert sind, verringert wird.

Um die kinetische Energie, die im Rahmen eines erfindungsgemäßen Verfahrens aufgrund des Schubbetriebs des Verbrennungsmotors durch Umwandlung mittels des Generators für den Betrieb der Heizvorrichtung nutzbar ist, in einem möglichst großen Ausmaß zu verwenden, kann vorzugsweise vorgesehen sein, dass während des Schubbetriebs der Generator mit maximaler elektrischer Leistungsabgabe betrieben wird.

Im Rahmen eines erfindungsgemäßen Verfahrens kann es gegebenenfalls sinnvoll sein, die Heizvorrichtung zusätzlich mit Energie zu betreiben, die aus einer Energiespeicherquelle, beispielsweise einer Batterie, stammt. Dabei kann insbesondere vorgesehen sein, dass die Heizvorrichtung nur dann zusätzlich mit Energie aus der Energiespeicherquelle betrieben wird, wenn eine Soll-Heizleitung der Heizvorrichtung größer als eine elektrische Ist-Leistung des Generators ist. Mit anderen Worten kann vorgesehen sein, dass die Energiespeicherquelle nur dann für einen Betrieb der Heizvorrichtung genutzt wird, wenn der Schubbetrieb der Brennkraftmaschine so schwach ist, dass die mittels des Generators erzeugbare elektrische Leistung geringer als die für ein Heizen des Abgases mittels der Heizvorrichtung vorgesehene Heizleistung ist.

Der Abzweig der Abgasrückführleitung und/oder, sofern vorgesehen, die Abgasnachbehandlungseinrichtung kann/können stromab einer in den Abgasstrang integrierten Abgasturbine (eines Abgasturboladers) angeordnet sein, weil sich bei einer solchen Ausgestaltung einer Brennkraftmaschine im besonderen Maße die Problematik einer nur relativ langsamen Erwärmung der Abgasrückführleitung und/oder der Abgasnachbehandlungseinrichtung stellt, weil stromab der Abgasturbine relativ kaltes Abgas vorliegt. Dies ist nicht nur in einem bereits erfolgten Übergang von Wärmeenergie auf die Abgasturbine sondern insbesondere auch in der funktionsgemäßen Entspannung des Abgases durch die Abgasturbine begründet.

Die Abgasnachbehandlungseinrichtung einer erfindungsgemäß betriebenen Brennkraftmaschine kann insbesondere einen oder mehrere der folgenden Abgasnachbehandlungskomponenten umfassen: Oxidationskatalysator, Stickoxidspeicherkatalysator, SCR-Katalysator (SCR: Selektive katalytische Reduktion von Stickoxiden), Partikelfilter.

Weiterhin bevorzugt kann vorgesehen sein, dass der Verbrennungsmotor im Rahmen eines erfindungsgemäßen Verfahrens selbstzündend und vorzugsweise auch quantitätsgeregelt betrieben wird. Der Verbrennungsmotor kann demnach insbesondere in Form eines Dieselmotors ausgestaltet sein, weil ein solcher Dieselmotor grundsätzlich relativ kaltes Abgas erzeugt und folglich insbesondere nach einem Kaltstart eines solchen Dieselmotors nur relativ langsam eine ausreichende Erwärmung des Abgasstrangs sowie einer Abgasrückführleitung erreicht wird. Zudem können die Schadstoffemissionen insbesondere eines Dieselmotors vorteilhaft mittels eine Abgasrückführung beeinflusst werden. Möglich ist aber auch, dass der Verbrennungsmotor im Rahmen eines erfindungsgemäßen Verfahrens fremdgezündet und insbesondere auch quantitätsgeregelt betrieben wird und demnach als Ottomotor ausgestaltet ist. Möglich ist zudem eine Kombination aus selbstzündendem und fremdgezündetem Betrieb, beispielsweise bei einer Ausgestaltung als Verbrennungsmotor mit homogener Kompressionszündung. Der Verbrennungsmotor kann im Rahmen eines erfindungsgemäßen Verfahrens mit Flüssigkraftstoff (d.h. Diesel oder Benzin) oder mit einem gasförmigen Kraftstoff (insbesondere Erdgas, LNG oder LPG) betrieben werden.

In die Abgasrückführleitung kann vorzugsweise eine Abzweigung zur Ausgestaltung einer Brennkraftmaschine, wie sie in der EP 2 336 538 A1 beschrieben ist, integriert sein.

Die Erfindung betrifft im Übrigen auch ein Verfahren zum Betreiben eines Kraftfahrzeugs in der zuvor beschriebenen Art und Weise. Das Kraftfahrzeug kann insbesondere ein radbasiertes und nicht schienengebundenes Kraftfahrzeug (vorzugsweise ein PKW oder ein LKW) sein.

Die Erfindung wird nachfolgend anhand von in den Zeichnungen dargestellten Ausführungsbeispielen näher erläutert. In den Zeichnungen zeigt, jeweils in vereinfachter Darstellung:
- Fig. 1:: eine für die Durchführung eines erfindungsgemäßen Verfahrens geeignete Brennkraftmaschine gemäß einer ersten Ausgestaltungsform;
- Fig. 2:: eine für die Durchführung eines erfindungsgemäßen Verfahrens geeignete Brennkraftmaschine gemäß einer zweiten Ausgestaltungsform; und
- Fig. 3:: ein Betriebskennfeld einer erfindungsgemäß betriebenen Brennkraftmaschine.

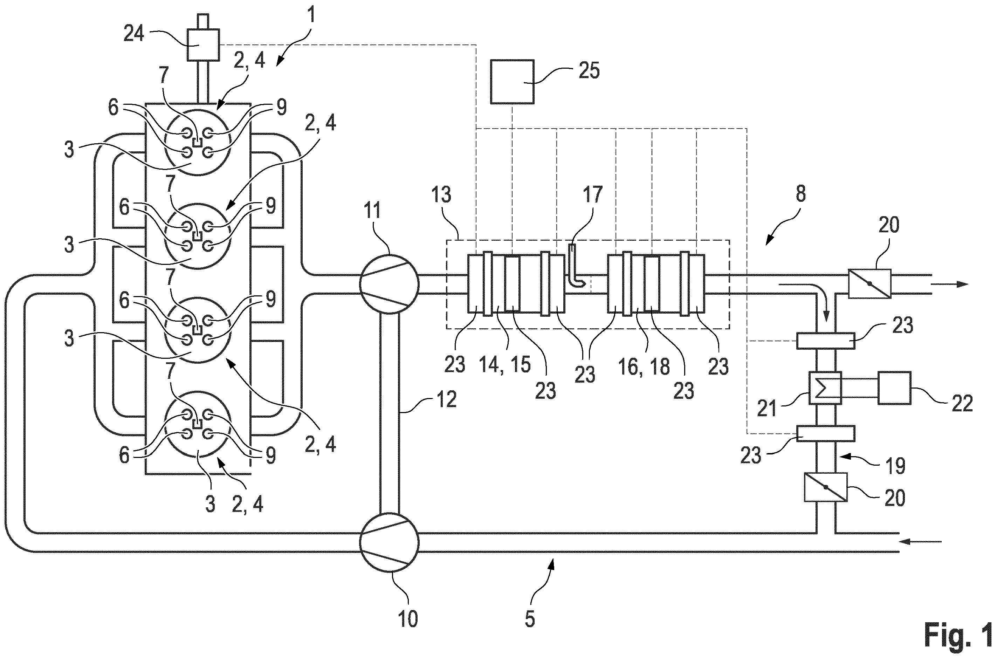

Die in der Fig. 1 gezeigte Brennkraftmaschine umfasst einen Verbrennungsmotor 1, der beispielhaft in Form eines Hubkolbenmotors mit vier in Reihe angeordneten Zylinderöffnungen 2 ausgestaltet ist. Die Zylinderöffnungen 2 begrenzen mit darin geführten Hubkolben 3 und einem Zylinderkopf jeweils einen Brennraum 4. Diesen Brennräumen 4 wird im Betrieb des Verbrennungsmotors 1 und damit der Brennkraftmaschine Frischgas über einen Frischgasstrang 5 zugeführt, wobei die Zufuhr des Frischgases mittels Einlassventilen 6, die den einzelnen Brennräumen 4 zugeordnet sind, gesteuert wird. Bei dem Frischgas handelt es sich ausschließlich oder hauptsächlich um Luft, die aus der Umgebung angesaugt wird. Bei der Verbrennung von Gemischmengen, die aus dem Frischgas sowie aus direkt über Kraftstoffinjektoren 7 in die Brennräume 4 eingespritztem Kraftstoff bestehen, wird Abgas erzeugt. Dieses Abgas wird über einen Abgasstrang 8 der Brennkraftmaschine abgeführt, wobei das Ausbringen des Abgases aus den einzelnen Brennräumen 4 mittels Auslassventilen 9 gesteuert wird.

Die Brennkraftmaschine ist aufgeladen ausgestaltet, wozu in den Frischgasstrang 5 ein Frischgasverdichter 10 integriert ist. Der Frischgasverdichter 10 ist Teil eines Abgasturboladers, der weiterhin noch eine Abgasturbine 11 umfasst, die in den Abgasstrang 8 integriert ist. Abgas, das die Abgasturbine 11 durchströmt, führt zu einem rotierenden Antrieb eines Turbinenlaufrads, das über eine Welle 12 drehantreibend mit einem Verdichterlaufrad des Frischgasverdichters 10 verbunden ist, so dass im Ergebnis ein Antrieb des Frischgasverdichters 10 mittels der Abgasturbine 11 erfolgt.

Die Abgasturbine 11 ist stromauf (bezüglich der Strömungsrichtung des Abgases) einer Abgasnachbehandlungseinrichtung 13 in dem Abgasstrang 8 angeordnet. Die Abgasnachbehandlungseinrichtung 13 ist dafür vorgesehen, Bestandteile des Abgases, die Schadstoffe darstellen, aus dem Abgas zu entfernen oder in unschädliche Bestandteile umzuwandeln.

Die Abgasnachbehandlungseinrichtung 13 umfasst in dem Ausgestaltungsbeispiel gemäß der Fig. 1 mehrere Abgasnachbehandlungskomponenten: konkret ist ein Oxidationskatalysator 14, ein Stickoxidspeicherkatalysator 15, ein SCR-Katalysator 16 mit vorgelagerter Einspritzvorrichtung 17 für ein Reduktionsmittel (NH₃) sowie ein Partikelfilter 18 vorgesehen. Dabei sind der Oxidationskatalysator 14 sowie der Stickoxidspeicherkatalysator 15 integral, d.h. in Form einer beide Abgasnachbehandlungsfunktionen bewirkenden, ersten Abgasnachbehandlungskomponente ausgestaltet. Das gleiche gilt für den SCR-Katalysator 16 und den Partikelfilter 18 in Form einer integralen, zweiten Abgasnachbehandlungskomponente.

Die Brennkraftmaschine umfasst weiterhin eine Abgasrückführleitung 19, die stromab der Abgasnachbehandlungseinrichtung 13 aus dem Abgasstrang 8 abzweigt und die stromauf des Frischgasverdichters 10 in den Frischgasstrang 5 mündet. Mittels der Abgasrückführleitung 19 kann bedarfsweise ein Teil oder auch das gesamte an der Mündung von dieser ankommende Abgas in den Frischgasstrang 5 eingeleitet werden, wo dieses mit Luft vermischt und nach einer Verdichtung mittels des Frischgasverdichters 10 den Brennräumen 4 des Verbrennungsmotors 1 (wieder) zugeführt wird. Eine Steuerung beziehungsweise Einstellung des Anteils (0% bis 100%) des über die Abgasrückführleitung 19 zu führenden Abgases kann mittels zwei Steuerventilen 20 realisiert werden, von denen eines in die Abgasrückführleitung 19 integriert ist (sogenanntes "Abgasrückführventil") und das andere stromab der Abzweigung der Abgasrückführleitung 19 in den Abgasstrang 8 integriert ist (sogenannte "Abgasklappe").

In die Abgasrückführleitung 19 ist weiterhin ein Abgaskühler 21 beziehungsweise eine erste Wärmetauschseite davon integriert. Eine zweite Wärmetauschseite des Abgaskühlers 21 ist in ein Kühlsystem 22 der Brennkraftmaschine integriert, in dem ein flüssiges Kühlmittel in mehreren Kühlkreisen förderbar ist, um eine Kühlung von denjenigen Komponenten der Brennkraftmaschine, für die eine solche Kühlung erforderlich ist, zu bewirken.

In den Abgasstrang 8 (beziehungsweise in den Abschnitt davon, der stromauf der Abzweigung der Abgasrückführleitung 19 gelegen ist) und/oder in die Abgasrückführleitung 19 sind eine oder mehrere elektrische Heizvorrichtungen 23 integriert. Die Fig. 1 zeigt eine Vielzahl von Möglichkeiten bezüglich der Anordnung dieser Heizvorrichtung(en) 23. Der oder die in den Abgasstrang 8 integrierten Heizvorrichtungen 23, sofern vorhanden, sind vorzugsweise zumindest einer der (kombinierten) Abgasnachbehandlungskomponenten zugeordnet, so dass die entsprechende(n) Abgasnachbehandlungskomponenten(n) bedarfsweise mittels der Heizvorrichtung(en) 23 beheizbar ist/sind. Eine Übertragung der Wärmeenergie kann dabei mittels Strahlung und/oder Konvektion erfolgen. Die der oder den Abgasnachbehandlungskomponenten zugeordnete(n) Heizvorrichtung(en) 23 kann/können gemäß der Fig. 1 beispielsweise unmittelbar stromauf davon angeordnet oder in diese integriert sein. Eine Anordnung von Heizvorrichtungen 23 unmittelbar stromab der Abgasnachbehandlungskomponenten ist gemäß der Fig. 1 ebenfalls möglich. Bei einer Integration einer oder mehrerer Heizvorrichtungen 23 in der Abgasrückführleitung 19 können diese gemäß der Fig. 1 beispielsweise unmittelbar stromauf und/oder unmittelbar stromab des Abgaskühlers 21 angeordnet sein.

Die für einen Betrieb der Heizvorrichtung(en) 23 erforderliche Energie kann einerseits mittels eines Generators 24 bereitgestellt werden, der direkt von dem Verbrennungsmotor 1 beziehungsweise von einer Abtriebswelle (Kurbelwelle) 13 des Verbrennungsmotors 1 angetrieben wird. Ergänzend oder alternativ kann die für einen Betrieb der Heizvorrichtung(en) 23 erforderliche Energie auch mittels einer Energiespeicherquelle 25 in Form einer Batterie bereitgestellt werden.

Im Rahmen eines erfindungsgemäßen Verfahrens zum Betreiben einer Brennkraftmaschine gemäß der Fig. 1 ist vorgesehen, die Heizvorrichtung(en) 23 (auch) dazu zu nutzen, während eines Schubbetriebs des Verbrennungsmotors 1 das von diesem ausgestoßene Abgas zu erwärmen, wobei dieses erwärmte Abgas teilweise oder vollständig über die Abgasrückführleitung 19 geführt wird, um diese zu erwärmen. Dies erfolgt insbesondere während einer Warmlaufphase nach einem Kaltstart der Brennkraftmaschine, um die Abgasrückführleitung 19 und die darin integrierten Komponenten sowie den in den Frischgasstrang 5 integrierten Frischgasverdichter 14 soweit zu erwärmen, dass die Gefahr einer Kondensation von Feuchtigkeit aus über die Abgasrückführleitung 19 geführtem Abgas auch dann nicht mehr besteht, wenn das Abgas nicht mehr mittels der Heizvorrichtung(en) 23 erwärmt wird. Dadurch soll insbesondere möglichst schnell nach einem Kaltstart der Brennkraftmaschine eine Abgasrückführung während eines Lastbetriebs des Verbrennungsmotors realisiert werden, was sich vorteilhaft hinsichtlich der Schadstoff- und insbesondere Stickoxidrohemissionen des Verbrennungsmotors 1 auswirkt.

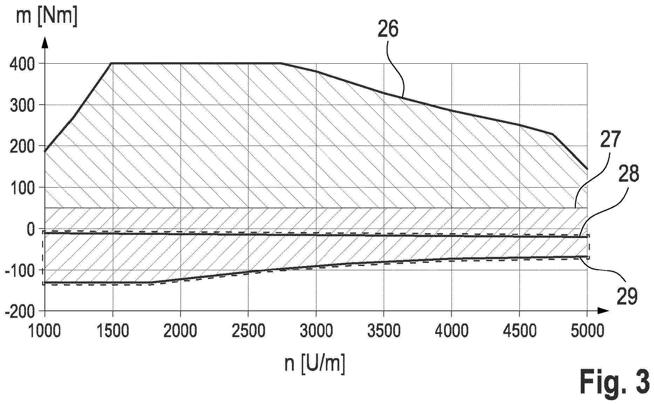

Die Fig. 3 zeigt den Betriebsbereich des Verbrennungsmotors 1, in dem das erfindungsgemäße Verfahren durchgeführt wird. Dargestellt ist ein Betriebskennfeld, in dem der Verlauf des von dem Verbrennungsmotor 1 erzeugten oder aufgenommenen Drehmoments (m) über der Betriebsdrehzahl (n) dargestellt ist. Die Kurve 26 zeigt dabei den Verlauf des von dem Verbrennungsmotor 1 maximal erzeugbaren Drehmoments. Die (konstant verlaufende) Kurve 27 zeigt dagegen die auf das Drehmoment bezogene Grenzlinie bezüglich des Gradienten der Temperatur der Abgasnachbehandlungseinrichtung 13. Bei einem Betrieb des Verbrennungsmotors 1 in oberhalb dieser Kurve 27 liegenden Betriebspunkten ist ein positiver Temperaturgradient gegeben, so dass während der Warmlaufphase eine Erhöhung der Temperatur der Abgasnachbehandlungseinrichtung 13 durch das von dem Verbrennungsmotor 1 erzeugte Abgas bewirkt wird. Bei einem Betrieb des Verbrennungsmotors 1 unterhalb dieser Kurve 27 liegt dagegen ein negativer Temperaturgradient vor, so dass während der Warmlaufphase üblicherweise eine Auskühlung der Abgasnachbehandlungseinrichtung 13 erfolgen würde. Die (konstant verlaufende) Kurve 28 in der Fig. 3 zeigt weiterhin noch das von dem Verbrennungsmotor 1 während des unbefeuerten Schubbetriebs bewirkte Bremsmoment und die Kurve 29 den Verlauf eines mittels der Brennkraftmaschine maximal bewirkbaren Rekuperationsmoments, das sich aus dem Bremsmoment des in einem unbefeuerten Schubbetrieb befindlichen Verbrennungsmotors 1 sowie dem mittels des Generators 24 zusätzlich bewirkbaren Widerstandsmoments zusammensetzt. Der Bereich des Betriebskennfelds unterhalb der Kurve 28 ist derjenige, in dem mittels des Generators 24 in vorteilhafter Weise die für einen Betrieb der Heizvorrichtung(en) 23 benötigte elektrische Energie erzeugt werden kann.

Ein Zweck des erfindungsgemäßen Verfahrens besteht darin, mittels der Heizvorrichtung(en) 23 das während eines Schubbetriebs von dem Verbrennungsmotor 1 ausgestoßene Abgas zu erwärmen und über die Abgasrückführleitung 19 zu führen, um diese möglichst schnell nach einem Kaltstart der Brennkraftmaschine bis zum Erreichen einer ausreichend hohen Temperatur zu erwärmen. Diesem Zweck kann der in die Abgasrückführleitung 19 integrierte Abgaskühler 21 entgegenwirken, wenn dieser gleichzeitig eine Kühlwirkung aufgrund eines Übergangs von Wärmeenergie von dem Abgas auf das Kühlmittel des Kühlsystems 22 bewirkt. Erfindungsgemäß ist daher vorgesehen, den Abgaskühler 21 während dieser Maßnahme teilweise oder vollständig zu deaktivieren, indem bei der Brennkraftmaschine gemäß der Fig. 1 ein Massenstrom von durch den Abgaskühler 21 geführtem Kühlmittel des Kühlsystems reduziert (gegebenenfalls bis auf null) wird.

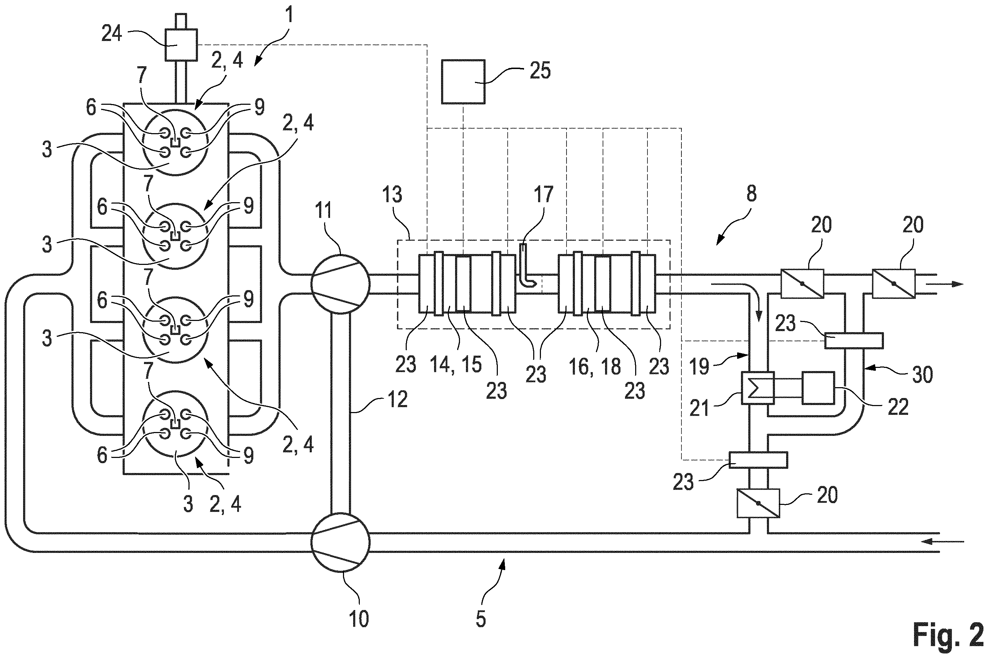

Ergänzend oder alternativ dazu kann auch vorgesehen sein, das über die Abgasrückführleitung 19 zu führende Abgas teilweise oder vollständig über einen den Abgaskühler 21 umgehenden Abgasbypass 30 zu führen, sofern ein solcher vorgesehen ist, wie dies bei der Brennkraftmaschine gemäß der Fig. 2 der Fall ist. Der Abgaskühler 21 kann dann keine Kühlung des über den Abgasbypass 30 geführten Abgases bewirken. Nachteilig daran kann jedoch sein, dass mittels des beheizten Abgases ein Erwärmen des Abgaskühlers 21 selbst nicht oder nur in einem reduzierten Umfang bewirkt wird.

Mit Ausnahme dieses zusätzlichen Abgasbypasses 30 sowie weiterer Steuerventile 20, die vorgesehen sind, um bedarfsgerecht Abgas über die Abgasrückführleitung 19 und/oder den Abgasbypasses 30 zu führen, entspricht die Brennkraftmaschine gemäß der Fig. 2 derjenigen gemäß der Fig. 1.

Die jeweilige Abgasnachbehandlungseinrichtung 13 der Brennkraftmaschinen gemäß den Fig. 1 und 2 kann konkret eine Ausgestaltung aufweist, die nachfolgend beschrieben wird.

Zumindest eine Heizvorrichtung 23 sollte vorzugsweise stromauf des Partikelfilters 18 in dem Abgasstrang 8 angeordnet sein. Diese kann auch unmittelbar stromauf des Partikelfilters 18 oder unmittelbar stromauf des SCR-Katalysators 16 (de z.B. eine Ausgestaltung als SCR-Scheibe aufweisen kann) angeordnet sein, wobei der SCR-Katalysator 16 wiederum unmittelbar stromauf des Partikelfilters 18 angeordnet sein kann. Der Partikelfilter 18 kann vorzugsweise derart ausgeführt sein, dass eine Regeneration durch Rußabbrand bereits ab Temperaturen > 350°C erfolgt. Die Zelligkeit des SCR-Katalysators 16 kann vorzugsweise im Vergleich zu derjenigen des Partikelfilters 18 maximiert sein, um eine Maximierung der für die NOx-Konvertierung wirksamen Oberfläche zu realisieren. Durch den Stickoxidspeicherkatalysator 15, der stromauf des SCR-Katalysators 16 angeordnet ist, kann der SCR-Katalysator 16 passiv ausgeführt sein. Möglich ist aber auch eine aktive Ausführung unter Verwendung einer Dosier- und Mischstrecke zwischen der Einspritzvorrichtung 17 und dem SCR-Katalysator 16.

Durch ein Beheizen der Abgasnachbehandlungseinrichtung 13 durch die mindestens eine Heizvorrichtung 13 kann nach einem Kaltstart der Brennkraftmaschine ein relativ schnelles Erreichen des Konvertierungsbeginns für HC-, CO-, NOx- und Partikelemissionen realisiert werden.

Die in den Fig. 1 und 2 dargestellten Abgasnachbehandlungseinrichtungen 13 sind zudem vorteilhaft hinsichtlich einer On-Board-Diagnose (OBD) der Brennkraftmaschine, da für die Konvertierung der HC- und CO-Emissionen zwei unterschiedliche Abgasnachbehandlungskomponenten verwendet werden. Für die NOx-Konvertierung stehen ebenfalls zwei, bei der gezeigten Verwendung des Stickoxidspeicherkatalysators 15 sogar drei Abgasnachbehandlungskomponenten zur Verfügung. So wird im Fehlerfall einer Abgasnachbehandlungskomponente das Einhalten der jeweiligen Emissionsschwellen sichergestellt.

### Bezugszeichenliste

- 1: Verbrennungsmotor
- 2: Zylinderöffnung
- 3: Hubkolben
- 4: Brennraum
- 5: Frischgasstrang
- 6: Einlassventil
- 7: Kraftstoffinjektor
- 8: Abgasstrang
- 9: Auslassventil
- 10: Frischgasverdichter
- 11: Abgasturbine
- 12: Welle
- 13: Abgasnachbehandlungseinrichtung
- 14: Oxidationskatalysator
- 15: Stickoxidspeicherkatalysator
- 16: SCR-Katalysator
- 17: Einspritzvorrichtung
- 18: Partikelfilter
- 19: Abgasrückführleitung
- 20: Steuerventil
- 21: Abgaskühler
- 22: Kühlsystem
- 23: Heizvorrichtung
- 24: Generator
- 25: Energiespeicherquelle
- 26: Verlauf des von dem Verbrennungsmotor maximal erzeugbaren Drehmoments
- 27: auf das Drehmoment bezogene Grenzlinie bezüglich des Gradienten der Temperatur der Abgasnachbehandlungseinrichtung
- 28: Verlauf des von dem Verbrennungsmotor während des unbefeuerten Schubbetriebs bewirkten Bremsmoments
- 29: Verlauf eines mittels der Brennkraftmaschine maximal bewirkbaren Rekuperationsmoments
- 30: Abgasbypass

## Patentansprüche

1. Verfahren zum Betreiben einer Brennkraftmaschine, die einen Verbrennungsmotor (1), einen mit dem Verbrennungsmotor (1) gekoppelten Generator (24), einen Frischgasstrang (5), einen Abgasstrang (8), eine Abgasrückführleitung (19), die aus dem Abgasstrang (8) abzweigt und in den Frischgasstrang (5) mündet, und mindestens eine elektrische Heizvorrichtung (23), die in den Abgasstrang (8) oder in die Abgasrückführleitung (19) integriert ist, umfasst, **dadurch gekennzeichnet, dass** während eines Schubbetriebs des Verbrennungsmotors (1) die Heizvorrichtung (23) mit von dem Generator (24) bereitgestellter Energie betrieben und mittels der Heizvorrichtung (23) erwärmtes Abgas teilweise oder vollständig über die Abgasrückführleitung (19) geführt wird.

2. Verfahren gemäß Anspruch 1, **gekennzeichnet durch** die Durchführung während einer Warmlaufphase der Brennkraftmaschine.

3. Verfahren gemäß Anspruch 1 oder 2, **dadurch gekennzeichnet, dass** die Heizvorrichtung (23) einer Abgasnachbehandlungseinrichtung (13) zugeordnet ist und die Abgasrückführleitung (19) stromab der Abgasnachbehandlungseinrichtung (13) aus dem Abgasstrang (8) abzweigt.

4. Verfahren gemäß einem der vorhergehenden Ansprüche, **dadurch gekennzeichnet, dass** in die Abgasrückführleitung (19) ein Abgaskühler (21) integriert ist, wobei während des Schubbetriebs das über die Abgasrückführleitung (19) zu führende Abgas über einen den Abgaskühler (21) umgehenden Abgasbypass (30) geführt wird und/oder eine Kühlmittelströmung durch den Abgaskühler (21) im Vergleich zu einem Lastbetrieb des Verbrennungsmotors (1) reduziert oder verhindert wird.

5. Verfahren gemäß Anspruch 4, **dadurch gekennzeichnet, dass** die Kühlmittelströmung teilweise oder vollständig über einen Kühlmittelbypass eines Kühlsystems (22) der Brennkraftmaschine geführt wird.

6. Verfahren gemäß einem der vorhergehenden Ansprüche, **dadurch gekennzeichnet, dass** während des Schubbetriebs des Verbrennungsmotors (1) der Generator (24) mit maximaler elektrischer Leistungsabgabe betrieben wird.

7. Verfahren gemäß einem der vorhergehenden Ansprüche, **dadurch gekennzeichnet, dass** die Heizvorrichtung (23) zusätzlich mit Energie betrieben wird, die aus einer Energiespeicherquelle (25) stammt.

8. Verfahren gemäß Anspruch 7, **dadurch gekennzeichnet, dass** die Heizvorrichtung (23) nur dann zusätzlich mit Energie aus der Energiespeicherquelle (25) betrieben wird, wenn eine Soll-Heizleitung der Heizvorrichtung (23) größer als eine elektrische Ist-Leistung des Generators (24) ist.

9. Verfahren gemäß einem der vorhergehenden Ansprüche, **dadurch gekennzeichnet, dass** die Abgasnachbehandlungseinrichtung (13) und/oder ein Abzweig der Abgasrückführleitung (19) stromab einer in den Abgasstrang (8) integrierten Abgasturbine (11) angeordnet ist/sind.

10. Verfahren gemäß einem der vorhergehenden Ansprüche, **dadurch gekennzeichnet, dass** der Verbrennungsmotor (1) selbstzündend betrieben wird.

## Claims

1. Method for operating an internal combustion engine which comprises a combustion unit (1), a generator (24) coupled to the combustion unit (1), a fresh gas line (5), an exhaust gas line (8), an exhaust gas recirculation line (19) which branches off from the exhaust gas line (8) and opens into the fresh gas line (5), and at least one electric heating device (23) which is integrated into the exhaust gas line (8) or into the exhaust gas recirculation line (19), **characterized in that** during an overrun mode of the combustion unit (1), the heating device (23) is operated with energy provided by the generator (24), and exhaust gas heated by means of the heating device (23) is partially or completely guided via the exhaust gas recirculation line (19).

2. Method according to claim 1, **characterized by** implementation during a warm-up phase of the internal combustion engine.

3. Method according to claim 1 or 2, **characterized in that** the heating device (23) is assigned to an exhaust gas aftertreatment device (13), and the exhaust gas recirculation line (19) branches off from the exhaust gas line (8) downstream of the exhaust gas aftertreatment device (13).

4. Method according to any of the preceding claims, **characterized in that** an exhaust gas cooler (21) is integrated into the exhaust gas recirculation line (19), wherein, during the overrun mode, the exhaust gas to be guided via the exhaust gas recirculation line (19) is guided via an exhaust gas bypass (30) bypassing the exhaust gas cooler (21), and/or a coolant flow through the exhaust gas cooler (21) is reduced or prevented in comparison to an operation of the combustion unit (1) under load.

5. Method according to claim 4, **characterized in that** the coolant flow is partially or completely guided via a coolant bypass of a cooling system (22) of the internal combustion engine.

6. Method according to any of the preceding claims, **characterized in that** the generator (24) is operated with maximum electrical power output during the overrun mode of the combustion unit (1).

7. Method according to any of the preceding claims, **characterized in that** the heating device (23) is additionally operated using energy which comes from an energy storage source (25).

8. Method according to claim 7, **characterized in that** the heating device (23) is only additionally operated using energy from the energy storage source (25) if a target heating output of the heating device (23) is greater than an actual electrical output of the generator (24).

9. Method according to any of the preceding claims, **characterized in that** the exhaust gas aftertreatment device (13) and/or a branch of the exhaust gas recirculation line (19) is/are arranged downstream of an exhaust gas turbine (11) integrated into the exhaust gas line (8).

10. Method according to any of the preceding claims, **characterized in that** the combustion unit (1) is operated with self-ignition.

## Revendications

1. Procédé permettant de faire fonctionner un moteur à combustion interne qui comprend un moteur thermique (1), un générateur (24) accouplé au moteur thermique (1), un circuit de gaz frais (5), un circuit de gaz d'échappement (8), une conduite de recyclage des gaz d'échappement (19) qui est dérivée du circuit de gaz d'échappement (8) et débouche dans le circuit de gaz frais (5), et au moins un dispositif de chauffage (23) électrique qui est intégré dans le circuit de gaz d'échappement (8) ou dans la conduite de recyclage des gaz d'échappement (19), **caractérisé en ce que,** pendant un fonctionnement en décélération du moteur thermique (1), le dispositif de chauffage (23) fonctionne avec de l'énergie fournie par le générateur (24) et les gaz d'échappement chauffés au moyen du dispositif de chauffage (23) sont guidés en partie ou en totalité par l'intermédiaire de la conduite de recyclage des gaz d'échappement (19).

2. Procédé selon la revendication 1, **caractérisé par** la mise en œuvre pendant une phase de mise en température du moteur à combustion interne.

3. Procédé selon la revendication 1 ou 2, **caractérisé en ce que** le dispositif de chauffage (23) est associé à un appareil de post-traitement des gaz d'échappement (13) et la conduite de recyclage des gaz d'échappement (19) est dérivée du circuit de gaz d'échappement (8) en aval de l'appareil de post-traitement des gaz d'échappement (13).

4. Procédé selon l'une des revendications précédentes,
**caractérisé en ce qu'**un refroidisseur de gaz d'échappement (21) est intégré dans la conduite de recyclage des gaz d'échappement (19), dans lequel, pendant le fonctionnement en décélération, les gaz d'échappement à guider par l'intermédiaire de la conduite de recyclage des gaz d'échappement (19) sont guidés par l'intermédiaire d'une dérivation de gaz d'échappement (30) contournant le refroidisseur de gaz d'échappement (21) et/ou un écoulement de liquide de refroidissement à travers le refroidisseur de gaz d'échappement (21) est réduit ou empêché par rapport à un fonctionnement en charge du moteur thermique (1).

5. Procédé selon la revendication 4, **caractérisé en ce que** l'écoulement de liquide de refroidissement est guidé en partie ou en totalité par l'intermédiaire d'une dérivation de liquide de refroidissement d'un système de refroidissement (22) du moteur à combustion interne.

6. Procédé selon l'une des revendications précédentes,
**caractérisé en ce que,** pendant le fonctionnement en décélération du moteur thermique (1), le générateur (24) fonctionne avec une puissance utile électrique maximale.

7. Procédé selon l'une des revendications précédentes,
**caractérisé en ce que** le dispositif de chauffage (23) fonctionne en outre avec de l'énergie provenant d'une source d'accumulateur d'énergie (25).

8. Procédé selon la revendication 7, **caractérisé en ce que** le dispositif de chauffage (23) fonctionne alors en outre avec de l'énergie provenant de la source d'accumulateur d'énergie (25) uniquement si une puissance de chauffage de consigne du dispositif de chauffage (23) est supérieure à une puissance électrique réelle du générateur (24).

9. Procédé selon l'une des revendications précédentes,
**caractérisé en ce que** l'appareil de post-traitement des gaz d'échappement (13) et/ou une dérivation de la conduite de recyclage des gaz d'échappement (19) sont disposés en aval d'une turbine à gaz d'échappement (11) intégrée dans le circuit de gaz d'échappement (8).

10. Procédé selon l'une des revendications précédentes,
**caractérisé en ce que** le moteur thermique (1) fonctionne à allumage automatique.
